# EUROPEAN PATENT SPECIFICATION

(11) **EP 2 794 417 B1**
(45) Date of publication and mention of the grant of the patent: **03.02.2016**
(21) Application number: 12790519.8
(22) Date of filing: 15.11.2012
(51) Int. Cl.: B65D 51/28

(54) **A CONTAINER CLOSURE DEVICE CAPABLE OF DISPENSING METERED AMOUNTS OF LIQUID**
BEHÄLTERVERSCHLUSSVORRICHTUNG ZUR AUSGABE VON ABGEMESSENEN FLÜSSIGKEITSMENGEN
DISPOSITIF DE FERMETURE DE RÉCIPIENT CAPABLE DE DISTRIBUER DES QUANTITÉS MESURÉES DE LIQUIDE

(30) Priority: 22.12.2011 EP 11195070
(43) Date of publication of application: 29.10.2014
(73) Proprietor: Unilever N.V., 3013 AL Rotterdam (NL); Unilever PLC, London, Greater London EC4Y 0DY (GB)
(72) Inventor: HAMER, Robert Jan, NL-3133 AT Vlaardingen (NL); MOLENAAR, Neeltje Hendrika, NL-3133 AT Vlaardingen (NL); VAN DE POLL, Jonkheer Theodoor Hendrik, NL-3133 AT Vlaardingen (NL)
(74) Representative: van Benthum, Wilhelmus A. J.
(86) International application number: PCT/EP2012/072700
(87) International publication number: WO 2013/092021

(56) References cited:
- WO-A1-01/68470
- US-A1- 2008 169 217

## Description

### Field of invention

The present invention relates to a container closure device capable of dispensing metered amounts of liquid inside a container upon closure.

### Background of the invention

A variety of packaging materials represented by devices such as stoppers, lid seals, seals, caps, lids, plugs and valves designed to close bottles, flask, jars, boxes, cans, barrels, tanks, tubs and other containers used to package and store food, dietary products and cosmetic products are commercially available. A container is generally defined as an assembly of materials designed to receive, contain and protect a good intended to be stored, transported and opened by the consumer.

A suitable container may contribute to the preservation of its contents by forming a physical barrier to for example, external germs and microbes, moisture and direct sun-light. The barrier afforded by the container is breached upon opening, whereupon the contents may be exposed to air, which may initiate and/or quicken spoilage. A suitable container closure device, such as a screw-on cap, allows the opening and re-closure of the container, such as a bottle or jar, limiting the exposure and possibly extending the open shelf-life. The open shelf-life is defined as the time during which the contents are considered safe to consume after opening the container for the first time. For example, many food products have a maximum 'open' shelf-life during which they are considered safe to use after the container is opened for the first time by the consumer.

A known method to extend the open shelf-life is to mix chemical preservatives directly into the food product during manufacture such as antioxidants and antimicrobial compounds. However, the presence of preservatives, especially artificial preservatives in foods, is disliked by consumers and is considered unhealthy. Furthermore, typically a relatively large amount of preservatives are mixed throughout the product since it is not known beforehand which parts of the contents may experience exposure (e.g. surface layer).

US 2008/0169217 discloses a closure device capable of releasing preservatives directly on the surface of a product in a container (i.e. the contents) upon closing of the container, in accordance with the preamble of appended claim 1. Most of the preservatives held by the spongy material of the closure device are released into the container during the first closing action of the container with the closure device.

In addition, depending on the shape of the container neck the spongy material can be completely compressed, thereby forcing any remaining preservatives upon a first closing action. For example, a container can have an external thread, which does not run up to the mouth of the container, but leaves a smooth and relatively long (unthreaded) neck area. With such a container, the mouth of the container can completely push superimposed layer 6b up against the interior roof of the cap, and therewith completely compress the spongy material.

The release of most of the preservatives during the first closing action is undesirable. It may lead to a high local concentration on the surface (i.e. top-layer) of the product, which in turn may result in an off-taste when food is sampled by the consumer. Furthermore, when the top-layer of the food product is consumed the level of preservatives remaining in the food product may drop below their effective concentration.

WO 01/68470 discloses a device capable of releasing a diffused gaseous aromatic material during several successive opening actions of a container. The closure device comprises an expandable/contractible hollow, which fills with gas evaporated from an impregnated body when the device is in place on the container (i.e. container is closed). When the container is opened gaseous material is expelled from the hollow into the headspace of the container.

Said closure device neither enables dispensing of liquid material nor teaches how to dispense material during closure of a container. Since the dispensed material is released by evaporation from an impregnated body, it is unlikely the device is capable of releasing a significant amount of material during each of several closing actions when performed in quick succession.

### Summary of the invention

It is an object of the present invention to provide a container closure device capable of dispensing a metered amount of liquid into a container during several successive closing actions.

It is a further object of the present invention to provide a container closure device capable of dispensing a metered amount of liquid into a container during several successive closing actions even when performed in quick succession.

It is a further object of the invention to provide a container closure device capable of dispensing a metered amount of liquid and to subsequently allow contact of the dispensed material to contact the container contents in gaseous form.

It is a further object of the invention to prolong the open shelf-life of spoilage sensitive products inside a container.

We have met these objectives by the closure device of the present invention, which is capable of dispensing a metered amount of a liquid into a container during each closing action for several successive closing actions. The closure device comprises a cap wall, a deformable reservoir capable of being filled with a liquid; and a rigid plate with one or more perforations. Upon closure the deformable reservoir is compressed by being squeezed between the rigid plate and the cap wall. The rigid plate is capable of compressing the reservoir up to 50 volume percent of the uncompressed volume and the rigid plate is adjustable to a pre-determined level. Therefore, the closure device according to the invention prevents a complete compression of the reservoir during a closing action. This enables the device to dispense a metered amount of liquid into the container and do so at least a second time. The closure device according to the invention is in that the deformable reservoir is also elastic and capable of re-attaining its uncompressed volume when the container is opened. Accordingly in a first aspect the present invention relates to a container closure device capable of dispensing metered amounts of a liquid into a container, wherein said closure device comprises:
- a closure device wall,
- a deformable and elastic reservoir capable of holding liquid,
- a rigid plate
   o wherein said plate comprises one or more perforations communicating with said reservoir and,
   o wherein said plate is adjustable relative to said closure device wall and able to maximally compress said reservoir by 50 volume percent of the uncompressed volume,
wherein upon compression liquid, if present in said reservoir, is forced from the reservoir into the container through the one or more perforations.

It was further found that a closure device according to the invention may suitably be filled with a preservative and used to prolong the open shelf-life of spoilage sensitive content of the container. Upon each closing action of the container, at least for the first two closing actions with the closure device, the container interior and its contents may be treated with liquid dispensed from the reservoir, such as a preservative.

Accordingly in a second aspect the present invention relates to a process to prolong the open shelf-life of spoilage sensitive contents held by a container comprising the step of closing the container with a closure device according to the invention.

### Detailed description

The closure device according to the present invention is intended to include any form of closure for a container, and preferably includes various kinds of caps such as screw-caps, push-on caps, composite caps having a retractable pouring spout and the like. Also the invention is applicable to any type of container, though containers having a mouth-like opening such as bottles and jars are preferred. Other types of containers such as drums, tubs or cans are also within the ambit of the present invention. Preferably the closure device is applied to containers comprising foods, but non-food spoilage sensitive products also fall within the ambit of the invention. Solid products, semi-solid, semi-liquid as well as liquid products are applicable to the utilisation of the present invention.

According to the invention liquid is dispensed into the container, which is typically the headspace of the container. The headspace generally indicates the region of the interior of the container above the level of any product contained therein. Also encompassed is the situation wherein liquid from the reservoir is dispensed into a structure to evaporate, which allows at least part of the dispensed liquid to contact the container contents in gaseous form by diffusion. For the purpose of the present invention with 'dispensed into the container' is implied the transfer of liquid material from the reservoir through the one or more perforations of the rigid plate, such that a metered amount of liquid is capable of contacting to container contents (in liquid and/or gaseous form).

Embodiments of the present invention will now be described, by way of example, with reference to the accompanying drawings, in which;
Figure 1 is an axial cross section through a first embodiment of the invention in open position;
Figure 2 is an axial cross section through the first embodiment of Fig.1 screwed onto the neck of a container and closing it.
Figure 3 is an axial cross section through a second embodiment of the closure device in open position.
Figure 4 is the embodiment shown in Fig. 1 and Fig. 2 in open position, fitted with the optional porous structure (12).
Figure 5 is the embodiment shown in Fig. 3 in open position, without the optional porous structure (12).

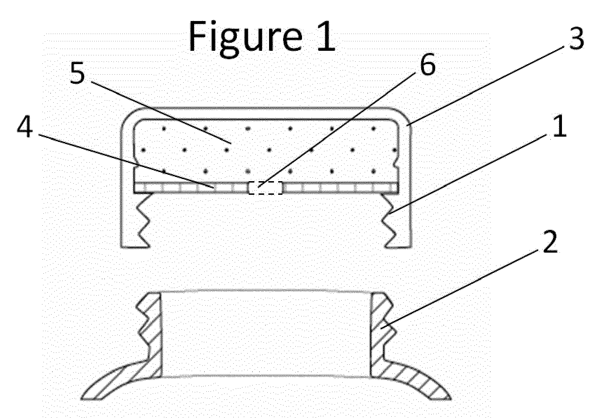

According to a first general preferred but not exclusive embodiment of the closure device according to the invention the screw-cap according to Fig. 1 is characterized by its additive function, which consists of containing and dispensing preservatives onto the food product in the container. The closure device is not in place on the container and the container is opened. The closure device is fitted with an internal thread (1) enabling it to be screwed onto the neck of the container (2). The cap wall (3) comprises an internal cavity that comprises a cylindrical rigid plate (4) and a reservoir (5). The reservoir comprises a low-density spongy polymer which is arranged in an elastic compressible disk and is capable of being filled with a liquid for example a liquid having a preservative activity. The cylindrical rigid plate (4) comprises a perforation (6) allowing liquid located in the reservoir to pass through the rigid plate (4) upon compression of the reservoir.

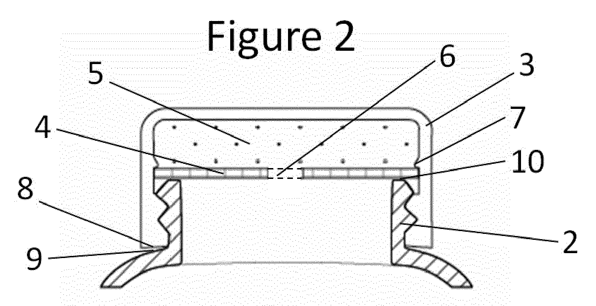

Fig. 2 shows the cap according to Fig 1. screwed onto the neck (2) of the container thereby closing it. The placement of the closure device on the neck of the container created a vertical pressure pushing the rigid plate (4) vertically upward to abut ledge (7). The ledge (7) predetermines the maximum compression of the reservoir (5). The reservoir (5) is compressed to about 20 volume percent of its uncompressed volume by the rigid plate (4) forcing a metered amount of liquid from the reservoir (5) through the perforation (6) into the container. In case the reservoir (5) is completely filled with liquid, the cap according to Fig. 1 and Fig. 2 is capable of dispensing between 1 and 15 volume percent of the initial volume of the liquid for 4 to 6 successive closing actions. It will be appreciated that the pre-determined level of maximum compression of the reservoir by the rigid plate (4) may also be set by the mouth of the cap (8) abutting the body of the container (9) in the closed position. Suitably in closed position the closure device forms an air tight seal of the container by the mouth of the container (10) abutting the rigid plate (4).

The rigid plate (4, 14) is so arranged as to be adjustable relative to the cap wall (3) and capable of compressing (i.e. reducing the volume of) the reservoir (5, 13). Typically the force of compression of the reservoir is provided by the muscle power of the consumer closing the container with the closure device. During a closing action the reservoir (5, 13) is compressed between the rigid plate (4, 14) and preferably the wall (3) of the closure device. The wall of the closure device (3) preferably is made at least partly of a rigid material. The rigid plate (4, 14) may lend its rigidity by the presence of any suitable rigid material such as metal and/or hard polymer. More preferably the rigid plate (4, 14) is capable of providing an air-tight seal of the mouth of the container opening (10). For example, the surface of the rigid plate (4) which may abut the container mouth (10) when the closure device is in place may be coated by a rubber and/or silicon layer. Preferably the closure device is made of materials which are suitable for use in food containers, such as materials which are non-toxic.

The rigid plate (4, 14) is adjustable to a predetermined level and may maximally compress the reservoir (5, 13) to 50 volume percent of the initial (i.e. uncompressed) volume. The predetermined level of the rigid plate (4, 14) may be established by way the hard ridge (7) or other protrusion extending from the cap wall (3) or in any other suitable way which limits the movement of the rigid plate (4, 14). It will be appreciated that the number of metered dispensing actions will depend on the actual level of compression of the reservoir (5, 13). Preferably the maximum compression of the reservoir (5, 13) is 1 to 35 volume percent, more preferably 5 to 25 volume percent, even more preferably 8 to 20 volume percent and still more preferably from 10 to 15 volume percent. When the reservoir (5, 13) is compressed by 35 volume percent this indicates that the compressed reservoir has 65 percent of the volume of the non-compressed reservoir. For example when the reservoir (5, 13) is compressed by 15 volume percent this indicates that the reservoir has 85 percent of the volume of the uncompressed reservoir. Preferably in case the reservoir (5, 13) of the closure device according to the invention is completely filled with liquid, the device is capable of dispensing a metered amount of liquid during 1 to 50, more preferably 2 to 25, even more preferably 3 to 12 and still more preferably 4 to 6 successive closing actions.

The rigid plate (4, 14) of the enclosure device according to the invention comprises one or more perforations (6) capable of allowing liquid to transfer from the reservoir (5, 13) into the container during active compression. Active compression refers to the time during which the size of the reservoir (5, 13) decreases in volume. Once the closure device is in place on the container (e.g. as shown in Fig. 2) the reservoir (5, 13) is compressed but not actively compressed. It will be appreciated that suitably the size of a perforation (6) is such that leakage of liquid from the reservoir (5, 13) when not actively compressed is reduced and/or prevented. The amount of leakage, if any, may depend on the viscosity of the liquid and/or the capability of the reservoir (5, 13) to hold liquid by absorption (e.g. capillary forces). For example a closure device comprising a reservoir (5, 13) composed of an absorbent material may allow the perforations (6) to have a larger diameter without resulting in leakage when not actively compressed. For example, in case the reservoir (5, 13) has little or no absorbent capacity, the perforations (6) of the rigid plate (4, 14) may be suitably small as to enable the surface tension of the liquid to block leakage when not actively compressed. Preferably the average diameter of the perforations (6) in the rigid plate is 0.05 to 15 mm, more preferably 0.1 to 10 mm, even more preferably 0.5 to 5 mm and still more preferably 1 to 2 mm. It will be appreciated that the number of perforations (6) will typically relate to the size of the cap (i.e. a rigid plate (4, 14) with a large surface area typically contains a larger number of perforations). Preferably the number of perforations (6) in the rigid plate (4, 14) is less than 25, more preferably less than 10, even more preferably less than 5 and still even more preferably is 1.

Preferably the reservoir (5, 13) comprises an absorbent material and more preferably comprises a material with an open cell structure, a sponge-like structure or a low-density fibre structure or combinations thereof. Examples of low-density fibre structures are a piece of cotton and a piece of cloth. Preferably said open cell, sponge-like and/or low-density fibre structures comprise, more preferably are essentially made of, polymers and/or natural polymers, even more preferably comprise, still even more preferably are essentially made of, compounds selected from the list consisting of polypropylene, polyurethane, polyvinyl, polysulphone, polymers of starch, cellulose, agarose, casein, chitosan or lactic acid and combinations thereof.

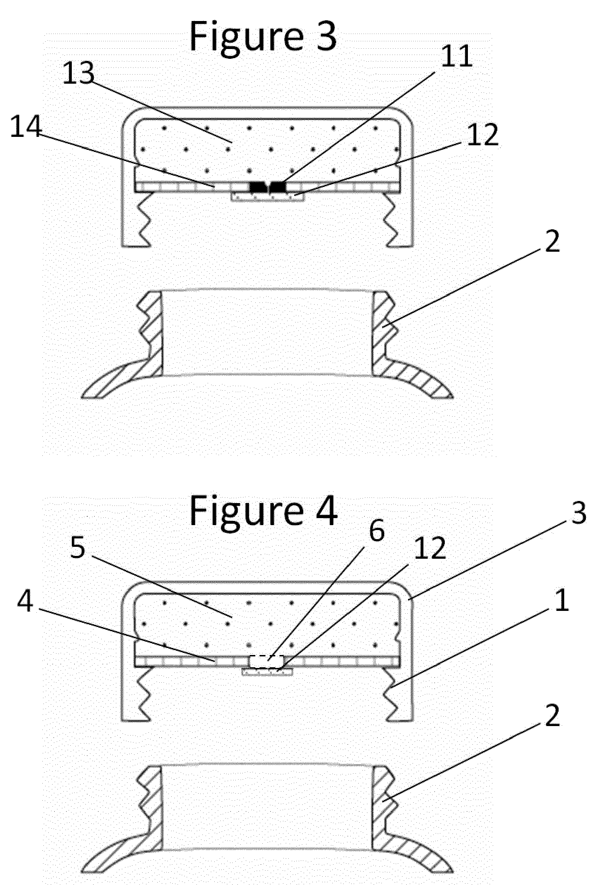

The reservoir (5, 13) is deformable and elastic. A closed container (Fig. 2) fitted with the closure device according to the invention may be opened whereupon the deformable and elastic reservoir (5, 13) is capable of expanding and re-attaining its uncompressed volume (Fig. 1 and Fig. 3). With reservoir (5, 13) is indicated the hollow formed by the cap wall (3) and the rigid plate (4, 14). The elasticity of the reservoir (5, 13) may be due to the fact that it is partly made of a deformable and elastic material and/or by the fact that it comprises (e.g. is partly filled with) such material. For example part of the wall (3) of the enclosure device may be deformable and elastic. Preferably the reservoir (5, 13) comprises (i.e. is partly filled with) deformable and elastic materials (e.g. many types of rubber) which form elastic structures such as coiled springs and/or sponge-like structures.

When the container is opened, the expansion of the reservoir (5, 13) adjusts the position of rigid plate (4, 14) and effectively re-sets the closure device to dispense another metered amount. Throughout this specification, unless specifically indicated, the uncompressed volume of the reservoir (5, 13) is defined as the maximum volume of the reservoir attainable when the closure device is not in place on the container (e.g. when the container is completely opened, Fig.1 and Fig. 3). It will be appreciated that depending on the physical characteristics of the reservoir (5, 13) it will takes some time for the reservoir to expand upon opening the container. Preferably the elasticity of the reservoir (5, 13) allows the reservoir to re-attain at least 50 to 80 percent of the difference between its maximally compressed volume and the uncompressed volume within 60 seconds, more preferably within 30 seconds, even more preferably within 15 seconds and still even more preferably within 5 seconds when not in place on the container.

A metered amount of liquid is defined as an amount falling within a chosen minimum and maximum amount. Subject to considerations such as the specific application of the closing device, the volume of container, the volume of the reservoir (5, 13), the concentration of an active in the liquid, if any, and the desired number of dispensing actions the minimum and maximum volume chosen to form the metered amount of liquid may vary. Preferably a metered amount is 0.1 to 50 volume percent, more preferably 0.5 to 25 volume percent, even more preferably 0.75 to 15 volume percent and still more preferably 1 to 5 volume percent of the volume of the liquid with which the closure device is initially loaded.

Preferably the ratio of the volume of the uncompressed reservoir (5, 13) to the volume of the container is 0.001:1 to 5:1 and more preferably 0.1:1 to 1:1.

It will be appreciated that preferably before the container is opened for the first time by the consumer, the reservoir (5, 13) of the closure device is filled as far as possible with liquid material to be dispensed. Also encompassed are embodiments of the closure device which allow refilling of the reservoir (5, 13) with liquid material. The maximum volume of liquid with which the reservoir (5, 13) may be filled depends on the structure of the reservoir, such as the density of the reservoir. The density of the reservoir (5, 13) may affect the deformable and elastic properties of the reservoir. To strike a balance between the deformable and elastic properties of the reservoir (5, 13) and the suitable volume of liquid to provide a number of metered dispensing actions, preferably the reservoir is filled with 10 to 95 volume percent, more preferably 20 to 80 volume percent, even more preferably 30 to 70 volume percent and still more preferably 30 to 60 volume percent of liquid based on the uncompressed volume of the reservoir (5, 13).

The liquid which may be present in the reservoir (5, 13) may have any suitable chemical property and for example form a watery or oily solution. For example, the liquid may be an organic and/or inorganic solvent or comprises a mixture of solvents. For example the liquid may be a volatile material. It will be appreciated that preferably the liquid does not compromise the structural integrity of the closure device, for example by dissolving the structural components of the reservoir (5, 13). The liquid may be a mixture of liquids. Preferably the reservoir (5, 13) comprises a liquid and more preferably a liquid which is a water-continuous system and even more preferably a liquid which is a Newtonian fluid. Preferably the liquid comprises one or more actives selected from the list consisting of dietary supplements, antioxidants, flavours, colouring agents, preservatives, thickeners, surfactants, dispersing agents, release agents, diffusing agents and stabilisers and combinations thereof, more preferably one or more antimicrobials and even more preferably bacteriocides or fungicides and combinations thereof. Preferably the liquid comprises compounds selected from the list consisting of lactic acid, acetic acid, peracetic acid, tartaric acid, benzoic acid, sodium and potassium sulphites, sodium and potassium nitrites, sodium and potassium bicarbonate, sodium and potassium sorbates, sodium and potassium benzoates, hydroxyl-8 quinoline, peroxide, salts, ethanol, sodium hypochlorite, nisin and other bacteriocins and combinations thereof. The liquid may essentially consist of said compounds in case these are liquid themselves. The actives may be dissolved and/or suspended in the liquid according to the standard way in accordance with the chosen ingredients. It will be appreciated that the particle size of any suspended actives is suitably small as to prevent clogging of the one or more perforations (6) of the rigid plate (4, 14). Preferably suspended particles when present in the liquid have a diameter of at most 50 micrometer, more preferably at most 10 micrometer and even more preferably at most 5 micrometer. It will be further appreciated that based on the specific properties of the liquid, liquid may be dispensed directly onto the product or may suitably be dispensed onto a porous structure (12) to allow evaporation. For example, when the liquid and/or any compounds present in the liquid leave a residue when the liquid evaporates (e.g. salts) preferably these kinds of liquids are not dispensed into a porous structure (12) but dispensed directly onto the contents more preferably as liquid drops.

By virtue of its pump-driven dispensing action, it was found that the closure cap according to the invention is especially suitable for dispensing metered amounts of viscous liquids. Preferably the reservoir (5, 13) comprises a liquid with a viscosity of 0.001 to 100000 mPa.s, more preferably 0.1 to 1000 mPa.s, even more preferably 0.2 to 100 mPa.s and still even more preferably 0.5 to 50 mPa.s at a temperature of 2 to 40 degrees Celsius, and more preferably at a temperature of 15 to 30 degrees Celsius.

Fig. 3 shows another embodiment of closure device according to the invention and the container in open formation. The embodiment of Fig. 3 is a cap similar to the embodiment of Fig. 1 and Fig. 2 but further comprises a pressure operated valve (11) and a porous structure (12). The valve (11) allows liquid to pass from the reservoir (13) through the rigid plate (14) only when the pressure inside the reservoir (13) exceeds the pressure outside the reservoir (e.g. during active closing). In the embodiment of Fig. 3 liquid is dispensed onto the porous structure (12), which in this embodiment is made of an absorbent sponge-like material capable of holding the liquid. Liquid present in the porous structure (12) can further distribute over the interior of the container and its contents in the form of a (evaporated) gas.

Fig. 4 shows an embodiment of closure device according to the invention similar to the embodiment of Fig. 1 and Fig. 2 but further comprising a porous structure (12). The porous structure 12 is placed on the surface of the rigid plate (4), on the side opposite the reservoir (5) and overlays the perforation (6). In this embodiment liquid is dispensed onto the porous structure (12), which in this embodiment is made of an absorbent sponge-like material capable of holding the liquid. Liquid present in the porous structure (12) can further distribute over the interior of the container and its contents in the form of a (evaporated) gas.

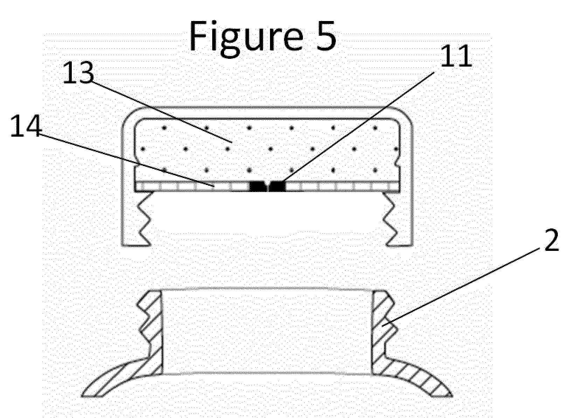

Fig. 5 shows an embodiment of closure device according to the invention similar to the embodiment of Fig. 3 but without a porous structure (12). The valve (11) allows liquid to pass from the reservoir (13) through the rigid plate (14) only when the pressure inside the reservoir (13) exceeds the pressure outside the reservoir (e.g. during active closing). In this embodiment liquid from the reservoir (13) can be dispensed directly into the container interior.

It will be appreciated that the porous structure (12) is positioned such that it may contact at least part, preferably all, of the liquid released from the reservoir (5, 13). The porous structure (12) is preferably positioned against the rigid plate (4, 14) on the side opposite the reservoir (5, 13) and overlays the one or more perforations (6) or valves (11) or combinations thereof and preferably overlays all the perforations (6) or valves (11) or combinations thereof.

The characteristic advantage of the caps shown in Fig. 1, 2; and in Fig. 3 is that metered amount of liquid can be dispensed in several successive closing actions into the container. The specific benefit of the embodiment shown in Fig. 3 is that at least part of the dispensed liquid from the reservoir (13) does not come into direct contact with the container contents in liquid form but in the form of a gas.

Preferably at least one, more preferably at least 50 percent and even more preferably all the perforations (6) are formed by pressure operated valves (11). A pressure operated valve restricts transfer of liquid and gas from the reservoir (13) through a perforation to the time of active compression of the reservoir (e.g. when the pressure in the reservoir is higher than the pressure in the container). Said valves are known to the person skilled in the art and may reduce liquid lost during storage due to leakage and/or evaporation. Furthermore, the use of pressure operated valves (11) may widen the scope of suitable liquids (e.g. liquids with a very low viscosity and/or liquid having a high vapour pressure). Throughout this specification with perforations (6) are indicated holes in the rigid plate (4, 14). It will be appreciated that in case perforations are formed of pressure operated valves (11) said perforations (i.e. holes) form typically only at specific times (e.g. during the act of closing).It will be further appreciated that upon opening of the closure device the deformable and elastic reservoir (13) will expand, creating a pressure difference over the rigid plate whereby air may enter the reservoir through the valve (11) allowing the closure device to reset.

Suitably the rigid plate (4, 14) may be covered by a removable gas- and/or liquid impermeable film to prevent loss of liquid material during storage and which may be removed by the consumer before (the first time) use.

Liquid may be dispensed into a porous structure (12). Liquid may be release from the porous structure (12) into the container by dripping (i.e. as droplets). As such it may effectively be dosed onto the surface of the container contents. Liquid present in the porous structure (12) may leave the structure as a gas, for example by evaporation. As a gas the dispensed material may efficiently distribute over the entire air-exposed surface of the container (e.g. headspace, the interior face of the container walls as well as its contents). Liquid present in the porous structure (12) may also leave the structure by a combination of dripping and evaporation. A combination of dripping and evaporation enables distribution of the dispensed material over the entire air-exposed surface of the container but with a relatively high concentration dispensed onto the surface of the container contents (e.g. a food).

Dripping of dispensed liquid directly onto the container contents may lead to a high local concentration (e.g. on the surface), off-taste and/or a reduced overall effectiveness of the dispensed material (e.g. preservative). Preferably at least part of the dispensed liquid is transformed into a gas, for example by evaporation) before coming into contact with the contents of the container. Therefore, preferably liquid is dispensed from the reservoir (13) into a structure (12) which allows liquid to transform into a gas. Suitably a porous structure (12) may be formed by a sponge-like body or fibrous structure, such as a piece of cloth, which may be impregnated by the dispensed liquid and positioned to be in contact with the interior (e.g. headspace) of the container. Suitably such a structure (12) may be formed by a sponge-like disk attached to the face of the rigid plate (14) which is exposed to the container interior. Preferably the closure device according to the invention comprises a porous structure (12) and more preferably a porous structure comprising, even more preferably essentially formed by, a sponge-like structure, a low-density fibre structure or combinations thereof.

### Use

A closure device according to the invention is capable of dispensing a metered amount of preservative liquid (i.e. a liquid which is preservative itself and/or comprises a preservative) into the container. This allows the areas of the container and the contents therein which have come into contact with the air (e.g. surface of a sauce such as a mayonnaise) to be treated with preservative. Furthermore, the container interior and its contents may be treated with said material during several closing actions. The dispensed material may contact the contents of the container in the form of liquid, but preferably the dispensed liquid is first transformed at least partially into a gaseous form before contacting the contents. Said transformation may suitably occur in a porous structure (12). Therefore, by virtue of allowing treatment and retreatment of the air-exposed area with a preservative the open shelf-life of the container contents may be prolonged. Accordingly the present invention encompasses a method to prolong the open shelf-life of spoilage sensitive contents, such as food, held in a container by closing the container with a closure device according to the invention wherein the reservoir (5, 13) comprises a preservative liquid.

In more traditional methods to improve the open shelf-life of foods, preservatives (i.e. chemical preservatives) may be completely mixed throughout the food product during manufacture. Mixing of a relatively large amount of preservatives is required since it is not know beforehand which parts of the product will be directly exposed (e.g. which parts of the product will form part of an exposed surface during use) and which parts will not. By use of the closure device according to the invention, preservatives are added to the area of the container and its contents which have been directly exposed to the air (e.g. the surface). Therefore a lower amount of total preservatives may be required to provide an adequate open shelf-life. The present invention encompasses a method to reduce the amount of required preservative to provide a suitable open shelf-life of spoilage-sensitive food by closing the container by a closure device according to the invention. It will be appreciated that in a method according to the invention to reduce the amount of chemical preservatives preferably, during manufacturing the food contents will have undergone one or more physical preservation processes such as, heating, irradiation, drying and/or freezing.

Preferably the methods to prolong the open shelf-life and/or reduce the amount of preservative are applied to a container comprising an edible product comprising 5 to 95 weight percent of water, more preferably an edible product selected from the list consisting of sauces, purees, candied fruits, jams, cooked vegetables, compotes, water-in-oil emulsions, oil-in-water emulsions, pastes, creams, dairy products and food concentrates and combinations thereof and even more preferably comprises an edible product selected from the list consisting of dairy based spreads, low-fat margarines, margarines, preservative free margarines, mayonnaise, dressings, puddings, tomato sauce, beverages such as teas and milk teas, condiments such as pesto sauce, jelly-based soup-, gravy- and sauce concentrates and combinations thereof.

## Claims

1. A container closure device capable of dispensing metered amounts of a liquid into a container, wherein said closure device comprises:
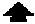 a closure device wall (3),
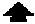 a deformable and elastic reservoir capable of holding liquid (5),
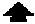 a rigid plate (4)
o wherein said plate comprises one or more perforations (6) communicating with said reservoir and,
o wherein said plate is adjustable relative to said closure device wall (3),
wherein upon compression liquid, if present in said reservoir, is forced from the reservoir (5) into the container through the one or more perforations (6),
**characterized in that** said plate is able to maximally compress said reservoir (5) by 50 volume percent of the uncompressed volume.

2. A closure device according to claim 1, wherein the maximum compression of the reservoir (5) is 1 to 35 volume percent and more preferably 10 to 15 volume percent.

3. A closure device according to claim 1 or claim 2, wherein the average diameter of the perforations (6) in the rigid plate (4) is 0.05 to 15 mm and preferably 1 to 2 mm.

4. A closure device according to any one of claims 1 to 3, wherein the number of perforations (6) in the rigid plate (4) is less than 10 and preferably less than 5.

5. A closure device according to any one of claims 1 to 4, wherein the reservoir (5) comprises an absorbent material and preferably comprises a material with an open cell structure, a sponge-like structure or low-density fibre structure or combinations thereof.

6. A closure device according to any one of claims 1 to 5, wherein the elasticity of the reservoir (5) allows the reservoir to re-attain 50 to 80 percent of the difference between its maximally compressed volume and the uncompressed volume within 30 seconds and preferably within 5 seconds when not in place on the container.

7. Container fitted with a closure device according to any one of claims 1 to 6, wherein the ratio of the volume of the uncompressed reservoir (5) to the volume of the container is 0.001:1 to 5:1 and preferably is 0.1:1 to 1:1.

8. A closure device according to any one of claims 1 to 7, wherein the reservoir (5) is capable of re-attaining its uncompressed volume when the container is opened, preferably is capable of re-attaining at least 50 to 80 percent of the difference between its maximally compressed volume and the uncompressed volume within 60 seconds, more preferably within 15 seconds when the container is opened.

9. A closure device according to any one of claims 1 to 8, wherein the reservoir (5) comprises a liquid comprising one or more actives selected from the list consisting of dietary supplements, antioxidants, flavours, colouring agents, preservatives, thickeners, surfactants, dispersing agents, release agents, diffusing agents and stabilisers and combinations thereof and more preferably one or more antimicrobials.

10. A closure device according to any one of claims 1 to 9, wherein the reservoir (5) comprises a liquid comprising compounds selected from the list consisting of lactic acid, acetic acid, peracetic acid, tartaric acid, benzoic acid, sodium and potassium sulphites, sodium and potassium nitrites, sodium and potassium bicarbonate, sodium and potassium sorbates, sodium and potassium benzoates, hydroxyl-8 quinoline, peroxide, salts, ethanol, sodium hypochlorite, nisin and other bacteriocins; and combinations thereof.

11. A closure device according to claims 1 to 10, wherein the reservoir (5) comprises a liquid with a viscosity of 0.2 to 100 mPa.s and preferably 0.5 to 50 mPa.s at a temperature of 2 to 40 degrees Celsius.

12. A closure device according to any one of claims 1 to 11, wherein at least 50 percent and preferably all of the perforations (6) are formed by pressure operated valves (11).

13. A closure device according to any one of claims 1 to 12, further comprising a porous structure (12) and more preferably a porous structure which is essentially formed by a sponge-like structure, a low-density fibre structure or combinations thereof,
wherein the porous structure (12) is positioned against the rigid plate (4, 14) on the side opposite the reservoir (5, 13) and overlays the one or more perforations (6) or valves (11) or combinations thereof and preferably overlays all the perforations (6) or valves (11) or combinations thereof.

14. Method to prolong the open shelf-life of spoilage-sensitive contents held by a container comprising the step of closing the container with a closure device according to any one of claims 1 to 12, wherein the reservoir (5) comprises a preservative liquid.

15. Method according to claim 14, wherein said spoilage-sensitive contents comprise an edible product selected from the list consisting of dairy based spreads, low-fat margarines, margarines, preservative free margarines, mayonnaise, dressings, puddings, tomato sauce, beverages such as teas and milk teas, condiments such as pesto sauce, jelly-based soup-, gravy- and sauce concentrates and combinations thereof.

## Patentansprüche

1. Behälterverschlussvorrichtung, die dosierte Mengen einer Flüssigkeit in einen Behälter abgeben kann, wobei die Verschlussvorrichtung Folgendes umfasst:
eine Verschlussvorrichtungswand (3),
ein verformbares und elastisches Reservoir (5), das eine Flüssigkeit halten kann,
eine feste Platte (4),
wobei die Platte eine oder mehrere Perforierungen (6) umfasst, die mit dem Reservoir kommunizieren, und
wobei die Platte bezüglich der Verschlussvorrichtungswand (3) einstellbar ist,
wobei bei einem Zusammendrücken die Flüssigkeit dann, wenn sie in dem Reservoir vorhanden ist, durch die eine oder die mehreren Perforierungen (6) aus dem Reservoir (5) gedrückt wird,
**dadurch gekennzeichnet, dass** die Platte das Reservoir (5) maximal um 50 Volumenprozent des nicht zusammengedrückten Volumens zusammendrücken kann.

2. Verschlussvorrichtung nach Anspruch 1, wobei das maximale Zusammendrücken des Reservoirs (5) 1 bis 35 Volumenprozent und stärker vorzugsweise 10 bis 15 Volumenprozent ausmacht.

3. Verschlussvorrichtung nach Anspruch 1 oder Anspruch 2, wobei der Durchschnittsdurchmesser der Perforierungen (6) in der festen Platte (4) 0,05 bis 15 mm und vorzugsweise 1 bis 2 mm ist.

4. Verschlussvorrichtung nach einem der Ansprüche 1 bis 3, wobei die Anzahl der Perforierungen (6) in der festen Platte (4) weniger als 10 und vorzugsweise weniger als 5 ist.

5. Verschlussvorrichtung nach einem der Ansprüche 1 bis 4, wobei das Reservoir (5) ein absorbierendes Material umfasst und vorzugsweise ein Material mit einer offenen Zellstruktur, einer schwammähnlichen Struktur oder einer Faserstruktur mit niedriger Dichte oder Kombinationen davon umfasst.

6. Verschlussvorrichtung nach einem der Ansprüche 1 bis 5, wobei die Elastizität des Reservoirs (5) erlaubt, dass das Reservoir 50 bis 80 Prozent des Unterschieds zwischen seinem maximal zusammengedrückten Volumen und dem nicht zusammengedrückten Volumen innerhalb von 30 Sekunden und vorzugsweise innerhalb von 5 Sekunden zurückerlangt, wenn es sich nicht an seinem Ort auf dem Behälter befindet.

7. Behälter, der mit einer Verschlussvorrichtung nach einem der Ansprüche 1 bis 6 ausgerüstet ist, wobei das Verhältnis des Volumens des nicht zusammengedrückten Reservoirs (5) zu dem Volumen des Behälters 0,001:1 bis 5:1 ist und vorzugsweise 0,1:1 bis 1:1 ist.

8. Verschlussvorrichtung nach einem der Ansprüche 1 bis 7, wobei das Reservoir (5) sein nicht zusammengedrücktes Volumen zurückerlangen kann, wenn der Behälter geöffnet wird, vorzugsweise mindestens 50 bis 80 Prozent des Unterschieds zwischen seinem maximal zusammengedrückten Volumen und dem nicht zusammengedrückten Volumen innerhalb von 60 Sekunden, stärker bevorzugt innerhalb von 15 Sekunden zurückerlangen kann, wenn der Behälter geöffnet wird.

9. Verschlussvorrichtung nach einem der Ansprüche 1 bis 8, wobei das Reservoir (5) eine Flüssigkeit enthält, die einen oder mehrere Wirkstoffe enthält, die aus der Liste ausgewählt sind, die aus Nahrungsergänzungsmitteln, Antioxidanzien, Aromen, Farbstoffen, Konservierungsmitteln, Verdickungsmitteln, oberflächenaktiven Stoffen, Dispergiermitteln, Trennmitteln, Streumitteln und Stabilisatoren und Kombinationen davon und stärker bevorzugt einer oder mehreren antimikrobiellen Substanzen besteht.

10. Verschlussvorrichtung nach einem der Ansprüche 1 bis 9, wobei das Reservoir (5) eine Flüssigkeit umfasst, die Verbindungen umfasst, die aus der Liste ausgewählt sind, die aus Milchsäure, Essigsäure, Peressigsäure, Weinsäure, Benzoesäure, Natrium- und Kaliumsulfiten, Natrium- und Kaliumnitriten, Natrium- und Kaliumbikarbonaten, Natrium- und Kaliumsorbaten, Natrium- und Kaliumbenzoaten, Hydroxyl-8-Chinolin, Peroxid, Salzen, Ethanol, Natriumhypochlorit, Nisin und anderen Bakteriozine und Kombinationen davon besteht.

11. Verschlussvorrichtung nach den Ansprüchen 1 bis 10, wobei das Reservoir (5) eine Flüssigkeit mit einer Viskosität von 0,2 bis 100 mPa·s und vorzugsweise 0,5 bis 50 mPa·s bei einer Temperatur von 2 bis 40 Grad Celsius umfasst.

12. Verschlussvorrichtung nach einem der Ansprüche 1 bis 11, wobei mindestens 50 Prozent und vorzugsweise alle Perforierungen (6) durch druckbetriebene Ventile (11) gebildet sind.

13. Verschlussvorrichtung nach einem der Ansprüche 1 bis 12, die ferner eine poröse Struktur (12) und stärker vorzugsweise eine poröse Struktur, die im Grunde durch eine schwammähnliche Struktur, eine Faserstruktur mit niedriger Dichte oder Kombinationen davon gebildet ist, umfasst,
wobei die poröse Struktur (12) gegen die feste Platte (4, 14) auf der Seite gegenüber dem Reservoir (5, 13) positioniert ist und die eine oder die mehreren Perforierungen (6) oder das eine oder die mehreren Ventile (11) oder Kombinationen davon überlappt und vorzugsweise alle Perforierungen (6) oder Ventile (11) oder Kombinationen davon überlappt.

14. Verfahren, um die offene Haltbarkeit von verderbempfindlichen Inhalten, die durch einen Behälter gehalten werden, zu verlängern, das den Schritt des Verschließens des Behälters mit einer Verschlussvorrichtung nach einem der Ansprüche 1 bis 12 umfasst, wobei das Reservoir (5) eine konservierende Flüssigkeit enthält.

15. Verfahren nach Anspruch 14, wobei die verderbempfindlichen Inhalte ein essbares Produkt umfassen, das aus der Liste ausgewählt ist, die aus Aufstrichen auf Milchbasis, fettarmer Margarine, Margarine, konservierungsmittelfreier Margarine, Mayonnaise, Dressings, Puddings, Tomatensoße, Getränken wie Tee und Milchtee, Zutaten wie Pestosoße, Suppen-, Bratensoßen- und Soßenkonzentrate und Kombinationen davon besteht.

## Revendications

1. Dispositif de fermeture de récipient capable de distribuer des quantités mesurées de liquide à un récipient, ledit dispositif de fermeture comprenant :
- une paroi de dispositif de fermeture (3),
- un réservoir déformable et élastique capable de contenir un liquide (5),
- une plaque rigide (4),
- dans lequel ladite plaque comprend une ou plusieurs perforation(s) (6) qui communique(nt) avec ledit réservoir, et
- dans lequel ladite plaque est réglable par rapport à ladite paroi de dispositif de fermeture (3),
dans lequel, lors d'une compression, le liquide, s'il est présent dans ledit réservoir, est forcé à passer du réservoir (5) au récipient par le biais de ladite ou desdites perforation(s) (6),
**caractérisé en ce que** ladite plaque est capable de comprimer au maximum ledit réservoir (5) à 50% de son volume.

2. Dispositif de fermeture selon la revendication 1, dans lequel la compression maximale du réservoir (5) est égale à 1 à 35 pourcents de son volume, et de préférence à 10 à 15 pourcents de son volume.

3. Dispositif de fermeture selon la revendication 1 ou 2, dans lequel le diamètre moyen des perforations (6) de la plaque rigide (4) est compris entre 0,05 et 15 mm, et de préférence entre 1 et 2 mm.

4. Dispositif de fermeture selon l'une quelconque des revendications 1 à 3, dans lequel le nombre de perforations (6) de la plaque rigide (4) est inférieur à 10, et de préférence inférieur à 5.

5. Dispositif de fermeture selon l'une quelconque des revendications 1 à 4, dans lequel le réservoir (5) comprend un matériau absorbant, et comprend de préférence un matériau à structure à cellules ouvertes, à structure en forme d'éponge, ou à structure à fibres de faible densité, ou des combinaisons de celles-ci.

6. Dispositif de fermeture selon l'une quelconque des revendications 1 à 5, dans lequel l'élasticité du réservoir (5) permet à celui-ci de ré-atteindre 50 à 80 pourcents de la différence entre son volume comprimé maximal et le volume non comprimé en 30 secondes, et de préférence en 5 secondes lorsqu'il n'est pas placé sur le récipient.

7. Récipient muni d'un dispositif de fermeture selon l'une quelconque des revendications 1 à 6, dans lequel le rapport entre le volume du réservoir non comprimé (5) et le volume du récipient est de 0,001:1 à 5:1, et de préférence de 0,1:1 à 1:1.

8. Dispositif de fermeture selon l'une quelconque des revendications 1 à 7, dans lequel le réservoir (5) est capable de ré-atteindre son volume non comprimé lorsque le récipient est ouvert, et est capable de préférence de ré-atteindre au moins 50 à 80 pourcents de la différence entre son volume comprimé maximal et son volume non comprimé en 60 secondes, et de préférence en 15 secondes lorsque le récipient est ouvert.

9. Dispositif de fermeture selon l'une quelconque des revendications 1 à 8, dans lequel le réservoir (5) comprend un liquide qui comprend un ou plusieurs agent(s) actif(s) choisi(s) parmi la liste qui consiste en des compléments alimentaires, des antioxydants, des arômes, des agents colorants, des agents de préservation, des épaississants, des tensioactifs, des agents de dispersion, des agents de libération, des agents de diffusion et des stabilisants, et des combinaisons de ceux-ci, et de préférence un ou plusieurs agent(s) antimicrobien(s).

10. Dispositif de fermeture selon l'une quelconque des revendications 1 à 9, dans lequel le réservoir (5) comprend un liquide qui comprend des composés choisis parmi la liste qui consiste en de l'acide lactique, de l'acide acétique, de l'acide peracétique, de l'acide tartrique, de l'acide benzoïque, des sulfites de sodium et de potassium, des nitrites de sodium et de potassium, du bicarbonate de sodium et de potassium, des sorbates de sodium et de potassium, des benzoates de sodium et de potassium, du hydroxyl-8-quinoline, du péroxyde, des sels, de l'éthanol, de l'hypochlorite de sodium, de la nisine et d'autres bactériocines ; et des combinaisons de ceux-ci.

11. Dispositif de fermeture selon les revendications 1 à 10, dans lequel le réservoir (5) comprend un liquide qui présente une viscosité de 0,2 à 100 mPa, et de préférence de 0,5 à 50 mPa à une température de 2 à 40 degrés Celsius.

12. Dispositif de fermeture selon l'une quelconque des revendications 1 à 11, dans lequel au moins 50 pourcents, et de préférence la totalité des perforations (6) sont formées par des soupapes à pression (11).

13. Dispositif de fermeture selon l'une quelconque des revendications 1 à 12, qui comprend une structure poreuse (12), et de préférence une structure poreuse qui est essentiellement formée d'une structure en forme d'éponge, d'une structure à fibres à faible densité, ou de combinaisons de celles-ci, dans lequel la structure poreuse (12) est positionnée contre la plaque rigide (4, 14) sur le côté opposé au réservoir (5, 13), et recouvre la ou les perforation(s) (6) ou les soupapes (11) ou des combinaisons de celles-ci, et recouvre de préférence toutes les perforations (6) ou soupapes (11), ou des combinaisons de celles-ci.

14. Procédé de prolongation de la durée de conservation, une fois ouvert, d'un contenu sensible à la détérioration placé dans un récipient, qui comprend l'étape de fermeture du récipient avec un dispositif de fermeture selon l'une quelconque des revendications 1 à 12, dans lequel le réservoir (5) comprend un liquide conservateur.

15. Procédé selon la revendication 14, dans lequel ledit contenu sensible à la détérioration comprend un produit comestible choisi parmi la liste qui consiste en des produits à tartiner à base de lait, des margarines allégées, des margarines, des margarines sans conservateur, de la mayonnaise, des sauces, des desserts, de la sauce tomate, des boissons telles que des thés et des thés au lait, des condiments tels que du pesto, des potages à base de gelée, des concentrés de sauces, et des combinaisons de ceux-ci.
